# EUROPÄISCHE PATENTSCHRIFT

(11) **EP 1 550 590 B1**
(45) Veröffentlichungstag und Bekanntmachung des Hinweises auf die Patenterteilung: **03.06.2009**
(21) Anmeldenummer: 04026136.4
(22) Anmeldetag: 04.11.2004
(51) Int. Cl.: B60S 1/04

(54) **Scheibenwischvorrichtung, insbesondere für ein Kraftfahrzeug**
Windscreen wiper system in particular for a motor vehicle
Systeme d'essuie-glace, notamment pour un vehicule automobile

(30) Priorität: 29.12.2003 DE 10361744
(43) Veröffentlichungstag der Anmeldung: 06.07.2005
(73) Patentinhaber: ROBERT BOSCH GMBH, 70442 Stuttgart (DE)
(72) Erfinder: Weiler, Michael, 363-9 Chungchongbuk-Do (KR); Kraus, Achim, 77815 Buehl (DE); Zimmer, Joachim, 77880 Sasbach (DE); Rapp, Juergen, 77886 Lauf (DE); Wickermann, Hans, 77815 Buehl (DE); Fleischer, Claus, 77815 Buehl (DE); Karle, Marc-Oliver, 70376 Stuttgart (DE); Volz, Heiko, 77855 Achern (DE); Joerger, Martin, 77654 Offenburg (DE); Koehn, Swen, 77815 Buehl-Vimbuch (DE)

(56) Entgegenhaltungen:
- EP-A- 1 033 295
- US-A- 6 138 320
- US-A1- 2003 077 013
- US-B1- 6 254 167

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen für Kraftfahrzeuge bekannt, die ein Wischerlager mit einem Formrohr aufweisen, indem eine Wischerwelle gelagert ist. An der Wischerwelle ist ein Wischhebel befestigbar, der im Betrieb pendelnd über die Scheibe bewegt wird. Eine derartige Scheibenwischvorrichtung ist beispielsweise in der DE-A-102 32 877 gezeigt.

Problematisch bei derartigen Scheibenwischvorrichtungen ist es, dass die Wischerwellen, die die Wischhebel tragen, aus der Karosserie des Kraftfahrzeugs herausragen und dadurch ein potentielles Verletzungsrisiko beim Aufprall eines Fußgängers auf die Karosserie des Kraftfahrzeugs darstellen. Der Fußgänger kann sich bei einem derartigen Aufprall erhebliche Verletzungen zuziehen, so dass ein Zurückweichen der Wischerwellen im Falle eines Aufpralls, das heißt im Falle des Einwirkens einer zu großen, definierten Kraft auf die Wischerwelle, unter Energieaufnahme wünschenswert ist. Hierzu sind bereits zahlreiche Vorschläge gemacht worden, die jedoch häufig aufwendig und kostenintensiv sind und darüber hinaus bei schräg auf die Wischerwelle prallenden Fußgängern nur unzureichenden Schutz bieten.

Weiterhin ist aus der US-B-6,254,167 eine Scheibenwischvorrichtung mit einem Wischerlager bekannt, das ein Formrohr aufweist, in dem eine Wischerwelle gelagert ist. Das Formrohr weist hierbei Befestigungselemente auf, an denen Sollbruchstellen vorgesehen sind, die beim Einwirken einer definierten Kraft auf die Wischerwelle, diese in axialer Richtung zur Begrenzung der Kraft bewegen lassen.

Weiterhin ist aus der EP-A-1 033 295 eine Scheibenwischvorrichtung bekannt, bei der das Formrohr eine Feder aufweist, die in eine radiale Nut einer Wischerwelle eingreift.

### Vorteile der Erfindung

Die erfindungsgemäße Scheibenwischvorrichtung mit den Merkmalen des Hauptanspruchs hat den Vorteil, dass durch Sollbruchstellen im Formrohr die Wischerwelle beim Einwirken einer definierten Kraft zurückweichen kann. Dadurch wird das potentielle Verletzungsrisiko für einen auf die Windschutzscheibe bzw. die Wischwellen der Scheibenwischvorrichtung aufprallenden Fußgänger erheblich reduziert. Weiterhin ist hierbei als vorteilhaft anzusehen, dass keine zusätzlichen Elemente benötigt werden, wodurch die Scheibenwischvorrichtung weiterhin kostengünstig und in ihrer Herstellung und Montage einfach bleibt.

Erfindungsgemäß ist es, wenn die Sollbruchstellen axial im Formrohr angeordnet sind, da sich auf diese Weise eine optimale Geometrie ergibt, so dass die Wischerwelle auch dann zurückzuweichen vermag, wenn die definierte Kraft schräg, also nicht axial, auf die Wischerwelle trifft.

Das Formrohr ist als Hohlzylinder ausgebildet und die Sollbruchstellen als Nuten im Außenmantel des Formrohrs vorgesehen.

Ebenso erfindungsgemäß ist es, wenn die Sollbruchstellen als Nuten im Innenmantel des Formrohrs vorgesehen sind. Insbesondere können diese Nuten dann auch Schmiermittel aufnehmen, wodurch die Lagerung der Wischerwelle im Formrohr verbessert wird.

Durch die in den Unteransprüchen aufgeführten Maßnahmen ergeben sich vorteilhafte Weiterbildungen und Verbesserungen der im Hauptanspruch angegebenen Merkmale.

In einer vorteilhaften Weiterbildung der Erfindung ist ein erstes Auslöseelement vorgesehen, dass als ringförmige Scheibe an der Wischerwelle vorgesehen ist. Durch ein derartiges Element wird die Kraftübertragung von der Wischerwelle auf das Formrohr verbessert und dadurch das Auslöseverhalten der Scheibenwischvorrichtung bei einem Aufprall verbessert.

In einer besonders einfachen Ausführung ist das erste Auslöseelement in eine Nute der Wischerwelle eingesetzt.

Hierbei ist es besonders vorteilhaft, wenn das Formrohr ein zweites Auslöseelement aufweist, das mit dem ersten Auslöseelement zusammenwirkt.

Hierbei ist es von besonderem Vorteil, wenn das zweite Auslöseelement derart ausgebildet ist, dass beim Einwirken einer axialen Kraft auf die Wischerweite das Formrohr radial nach Außen spreizbar ist. Durch die Geometrie des zweiten Auslöseelements ist die Auslösekraft, die die Wischerwelle axial freigibt, genau einstellbar.

Einfach und kostengünstig lässt sich die Scheibenwischvorrichtung herstellen, wenn ein Trägerrohr vorgesehen ist, das alle wesentlichen Komponenten der Scheibenwischvorrichtung trägt und das mit dem Formrohr fest verbunden ist.

Eine besonders einfache Variante der Erfindung wird dadurch realisiert, dass das Formrohr mit einem Befestigungselement verbunden ist, das zur Befestigung der Scheibenwischvorrichtung am Kraftfahrzeug dient.

### Zeichnungen

Zwei Ausführungsbeispiele der Erfindung sind in den Zeichnungen dargestellt und in der nachfolgenden Beschreibung näher erläutert. Es zeigen:
Figur 1, eine erfindungsgemäße Scheibenwischvorrichtung in einer perspektivischen Darstellung,
Figur 2, das Wischerlager einer erfindungsgemäßen Scheibenwischvorrichtung in einer perspektivischen Darstellung,
Figur 3, ein Wischerlager einer erfindungsgemäßen Scheibenwischvorrichtung in einer Variation und
Figur 4, einen Schnitt durch ein Wischerlager einer erfindungsgemäßen Scheibenwischvorrichtung.

### Beschreibung der Ausführungsbeispiele

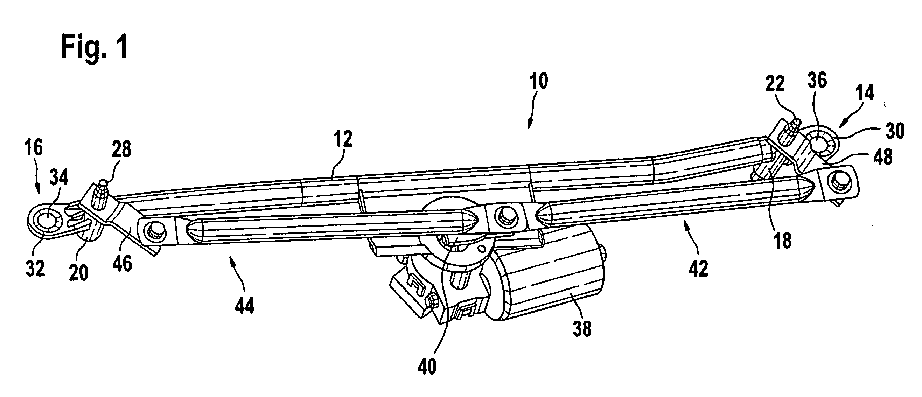

Figur 1 zeigt eine erfindungsgemäße Scheibenwischvorrichtung 10 in schematischer Darstellung. Diese umfasst im wesentlichen ein Tragelement 12, das hier als Trägerrohr ausgebildet ist und zwei Enden aufweist, die jeweils ein Wischerlager 14, 16 tragen. Jedes Wischerlager 14, 16 weist ein Formrohr 18, 20 auf, in dem ein jeweils eine Wischerwelle 26, 28 gelagert ist. Zur Befestigung mit der Karosserie des Kraftfahrzeugs ist am Formrohr 18, 20 ein Befestigungselement 30, 32 angeordnet, welches als im wesentlichen ebene Platte ausgebildet ist, die eine Öffnung als Befestigungsbehelfselement 34, 36 aufweist, durch die beispielsweise eine Schraube oder ein anderes Befestigungsmittel hindurchgeführt werden kann. Natürlich kann das Tragelement 12 auch direkt an der Karosserie des Kraftfahrzeugs befestigt sein.

Zum Betrieb der Scheibenwischvorrichtung 10 ist ein Elektromotor als Antrieb 38 vorgesehen, der über eine Abtriebskurbel 40 - die im Betrieb eine Hin- und Herbewegung oder eine oszillierende Bewegung vollführt - zwei Schubstangen 42, 44 in Bewegung versetzt. Die freien Enden dieser Schubstangen 42, 44 sind mit der Antriebskurbel 46, 48 verbunden, die wiederum drehfest mit den Wischerwellen 26, 28 verbunden sind. Wird der Antrieb 38 und damit die Abtriebskurbel 40 in eine oszillierende oder in eine Hin- und Herbewegung versetzt, so wird diese Bewegung über die Schubstangen 42, 44 auf die Antriebskurbeln 46, 48 übertragen, welche dadurch die Wischerwellen 26, 28 in eine Hin- und Herbewegung versetzen, so dass sich die an den Wischerwellen 26, 28 befestigten Wischhebel, die hier aus Übersichtlichkeitsgründen nicht gezeichnet sind, pendelnd über die Scheibe bewegen. Alle wesentlichen Komponenten, wie Antrieb 38 und Wischerlager 14, 16 werden vom Trägerrohr 12 gehalten, so dass sich eine kompakte Scheibenwischvorrichtung 10 ergibt.

Natürlich kann auch eine andere Mechanik als die hier beschriebene in einer erfindungsgemäßen Scheibenwischvorrichtung 10 verwendet werden, beispielsweise sei hier ein Wischer-Direkt-Antrieb genannt, bei dem lediglich ein Untersetzungsgetriebe die Rotation der Ankerwelle des Elektromotors 38 untersetzt und auf ein Schubstangengetriebe, wie hier beschrieben, verzichtet wird.

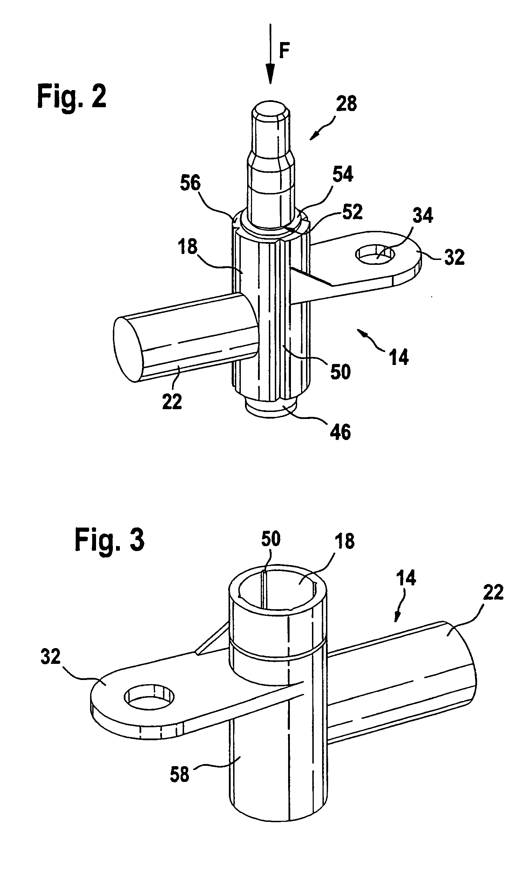

In Figur 2 ist ein Wischerlager 14 einer erfindungsgemäßen Scheibenwischvorrichtung 10 in perspektivischer Darstellung gezeigt. Das Wischerlager 14 umfasst im wesentlichen das Formrohr 18, indem die Wischerwelle 28 drehbeweglich gelagert ist. Senkrecht zum Formrohr 18 ist ein zylindrischer Fortsatz 22 vorgesehen, der zur Befestigung des Wischerlagers 14 am Trägerrohr 12 dient. Auf der dem Fortsatz 22 gegenüberliegenden Seite des Formrohres ist das Befestigungselement 32 angeordnet, das als ebene Platte ausgebildet ist, deren Senkrechte etwa parallel zur Rotations-Symmetrieachse des Formrohrs 18 bzw. der Wischerwelle 28 liegt. Das Befestigungselement 32 weist die Öffnung 34 auf, die zur Befestigung des Wischerlagers 14 an der Karosserie des Kraftfahrzeugs dient. Durch die Öffnung 34 können beispielsweise Schrauben oder andere Befestigungselemente hindurchgeführt werden. Das Formrohr 18 ist als Hohlzylinder ausgebildet und weist entlang seines äußeren Umfangs, also entlang seines Außenmantels, vier keilförmige Nuten auf, die jeweils als Sollbruchstelle 50 dienen. Die Nuten 50 erstrecken sich über die gesamte Länge der Längserstreckung des Formrohrs 18.

Die Wischerwelle 28 weist eine keilförmige, umlaufende Nut 52 auf, in der eine kreisringförmige Scheibe 54 sitzt, die über den Durchmesser der Wischerwelle 28 hinausragt. Sie Scheibe 54 ist an der dem freien Ende der Wischerwelle 28 zugewandten Stirnseite 56 des hohlzylindrischen Formrohrs 18 abgestützt, so dass die Wischerwelle 28 auch axial fixiert ist.

Wirkt nun eine Kraft F auf die Wischerwelle 28, so drückt die Wischwelle 28 selbst und auch über die Scheibe 54 an die inneren Wandungen des hohlzylindrischen Formrohrs 18. Überschreitet die Kraft eine definierte Größe, wird das Formrohr 18 an zumindest einer der Sollbruchstellen 50 derart zerbrechen, so dass die Wischerwelle 28 sich in Richtung der wirkenden Kraft fortbewegen kann. Im Bild würde die Wischerwelle 28 dann nach unten geschoben werden, beim Kraftfahrzeug entspricht dies einer Bewegung der Wischerwelle 28 ins Innere der Karosserie hinein, so dass die Wischerwelle 28 abtaucht und die Verletzungsgefahr für einen Fußgänger minimiert wird.

In Figur 3 ist eine Variation der Erfindung dargestellt. Hierbei ist die Wischerwelle 28 (Figur 2) in einem Lagerrohr 58 gelagert, von dem aus sich der Fortsatz 22 und das Befestigungselement 32 in analoger Weise wie in Figur 2 erstrecken. Auf die Stirnseite des hohlzylindrischen Lagerrohrs 58 ist jedoch das Formrohr 18 als separates Bauteil aufgesetzt. An seiner Innenseite sind die keilförmigen Nuten als Sollbruchstellen 50 ausgebildet und erstrecken sich, wie in Figur 2, über die gesamte Länge des Formrohrs.

Analog zum Beispiel aus Figur 2 können sie sich auch nur über einen Teil der Länge des Formrohrs 18 erstrecken.

In einer Variation der Erfindung können die Sollbruchstellen 50 selbstverständlich auch rechteckig oder rund ausgeführt sein, so dass sich halbkreisförmige Nuten ergeben. Es müssen auch nicht grundsätzlich vier Sollbruchstellen 50 vorgesehen sein, prinzipiell sind auch eine oder zwei oder auch mehr Sollbruchstellen denkbar, möglich und sinnvoll.

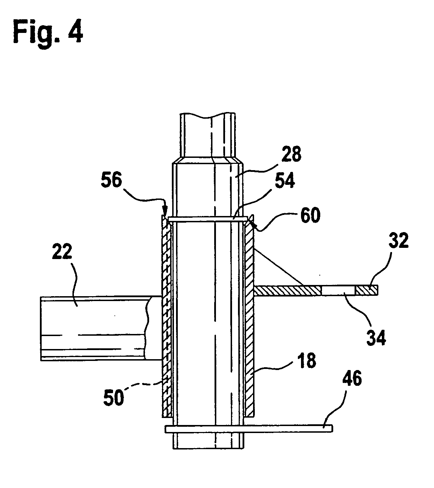

In Figur 4 ist eine weitere Variation eines erfindungsgemäßen Wischerlagers in einer Querschnittsdarstellung gezeigt. Das Formrohr 18 weist die Sollbruchstellen 50 auf, die als Nute ausgebildet sind und sich um über die volle Länge der Längserstreckung des Formrohrs 18 erstrecken. Die Stirnseite 56 des Formrohrs, die dem freien Ende der Wischerwelle 28 zugewandt ist weist hier eine Schräge als zweites Auslöseelement 60 auf, die mit der Scheibe 54 als ersten Auslöseelement zusammenwirkt. Wirkt eine Kraft auf die Wischerwelle 28 so drückt die Scheibe als erstes Auslöseelement 54 auf die angeschrägte Stirnseite 56 des Formrohrs 18. Durch die Schräge als zweites Auslöseelement 60 dieser Stirnseite 54 wirkt nun eine radiale Kraft nach Außen auf das hohlzylindrische Formrohr 18, so dass dieses radial nach Außen gespreizt wird und bricht.

Die Antriebskurbel 46 ist hier, als Variation zur Figur 1, auf der dem freien Ende der Wischerwelle 28 abgewandten Seite des Formrohr 18 befestigt.

Anstatt in der Scheibe 54 als erstes Auslöseelement kann auch ein im Querschnitt ovaler oder runder Ring vorgesehen sein. Insbesondere kann das erste Auslöseelement 54 an seiner radialen Außenseite selbst eine Schräge aufweisen, die mit der Schräge des zweiten Auslöseelement 60 korrespondiert, so dass die beiden Schrägen der ersten und zweiten Auslöseelemente aneinander zu gleiten vermögen. Durch den Gleitwinkel und die Oberflächen der Schrägen kann dann die Auslösekraft genau eingestellt werden. Die Antriebskurbel 46 kann sowohl auf der Seite des freien Endes der Wischerwelle 28 als auch am entgegengesetzten Ende der Wischerwelle 28 angeordnet sein.

## Patentansprüche

1. Scheibenwischvorrichtung (10), insbesondere für ein Kraftfahrzeug mit einer Scheibe, mit einem Wischerlager (14, 16) das ein Formrohr (18, 20) aufweist, in dem eine Wischerwelle (26, 28) gelagert ist, an der ein Wischhebel befestigbar ist, der im Betrieb pendelnd über die Scheibe bewegbar ist, wobei das Formrohr (18) mindestens eine Sollbruchstelle (50) aufweist, so dass beim Einwirken einer definierten Kraft auf die Wischerwelle (26, 28), diese zumindest in axialer Richtung zur Begrenzung der Kraft bewegbar ist, und die mindestens eine Sollbruchstelle (50) axial zum Formrohr (18) angeordnet ist, **dadurch gekennzeichnet, dass** das Formrohr (18) als Hohlzylinder ausgebildet ist und die Sollbruchstelle (50) als Nute im Außenmantel und/oder ein Innenmantel des Formrohrs (18) vorgesehen ist.

2. Scheibenwischvorrichtung (10) nach Anspruch 1, **dadurch gekennzeichnet, dass** ein erstes Auslöseelement (54), insbesondere eine ringförmige Scheibe, an der Wischerwelle (26, 28) vorgesehen ist.

3. Scheibenwischvorrichtung (10) nach Anspruch 2, **dadurch gekennzeichnet, dass** das erste Auslöseelement (54) in eine, insbesondere keilförmige, Nut (52) der Wischerwelle (26, 28) eingesetzt ist.

4. Scheibenwischvorrichtung (10) nach einem der Ansprüche 2 oder 3, **dadurch gekennzeichnet, dass** am Formrohr (18) ein zweites Auslöseelement (60) vorgesehen ist, das mit dem ersten Auslöseelement (54) zusammenwirkt.

5. Scheibenwischvorrichtung (10) nach Anspruch 4, **dadurch gekennzeichnet, dass** das zweite Auslöseelement (60) derart ausgebildet ist, dass beim Einwirken einer axialen Kraft auf die Wischerwelle (26, 28) das Formrohr (18) radial nach außen spreizbar ist.

6. Scheibenwischvorrichtung (10) nach einem der vorhergehenden Ansprüche, **dadurch gekennzeichnet, dass** ein Tragelement (12) vorgesehen ist, das alle wesentlichen Komponenten (14, 16, 38) der Scheibenwischvorrichtung (10) trägt und mit dem Formrohr (18) fest verbunden ist.

7. Scheibenwischvorrichtung (10) nach einem der vorhergehenden Ansprüche, **dadurch gekennzeichnet, dass** das Formrohr (18) mit einem Befestigungselement (32) verbunden ist, mit dem die Scheibenwischvorrichtung (10) am Kraftfahrzeug befestigt ist.

## Claims

1. Windscreen wiper device (10), in particular for a motor vehicle with a windscreen, with a wiper bearing (14, 16) which has a shaped tube (18, 20) with, mounted therein, a wiper shaft (26, 28) to which a wiper arm can be fastened, which wiper arm can be moved in a swinging manner over the windscreen during operation, wherein the shaped tube (18) has at least one predetermined breaking point (50) such that, if a defined force is applied to the wiper shaft (26, 28), the latter can be moved at least in the axial direction in order to limit the force, and the at least one predetermined breaking point (50) is arranged axially with respect to the shaped tube (18), **characterized in that** the shaped tube (18) is designed as a hollow cylinder, and the predetermined breaking point (50) is provided in the form of grooves in the outer casing and/or in the inner casing of the shaped tube (18).

2. Windscreen wiper device (10) according to Claim 1, **characterized in that** a first release element (54), in particular an annular washer, is provided on the wiper shaft (26, 28).

3. Windscreen wiper device (10) according to Claim 2, **characterized in that** the first release element (54) is inserted into a, in particular wedge-shaped, groove (52) of the wiper shaft (26, 28).

4. Windscreen wiper device (10) according to either of Claims 2 and 3, **characterized in that** a second release element (60) which interacts with the first release element (54) is provided on the shaped tube (18).

5. Windscreen wiper device (10) according to Claim 4, **characterized in that** the second release element (60) is designed in such a manner that, if an axial force is applied to the wiper shaft (26, 28), the shaped tube (18) can be spread radially outwards.

6. Windscreen wiper device (10) according to one of the preceding claims, **characterized in that** a supporting element (12) is provided, said supporting element supporting all of the essential components (14, 16, 38) of the windscreen wiper device (10) and being connected fixedly to the shaped tube (18).

7. Windscreen wiper device (10) according to one of the preceding claims, **characterized in that** the shaped tube (18) is connected to a fastening element (32) by means of which the windscreen wiper device (10) is fastened to the motor vehicle.

## Revendications

1. Système d'essuie-glace (10), notamment pour un véhicule automobile comprenant une vitre, avec un palier d'essuie-glace (14, 16) qui présente un tube formé (18, 20) dans lequel est monté un arbre d'essuie-glace (26, 28), sur lequel peut être fixé un levier d'essuie-glace, qui peut être déplacé suivant un mouvement pendulaire sur la vitre pendant le fonctionnement, le tube formé (18) présentant au moins un point destiné à la rupture (50), de sorte que dans le cas de l'application d'une force définie sur l'arbre d'essuie-glace (26, 28), celui-ci puisse être déplacé au moins dans la direction axiale pour limiter la force, et l'au moins un point destiné à la rupture (50) étant disposé axialement par rapport au tube formé (18),
**caractérisé en ce que** le tube formé (18) est réalisé sous forme de cylindre creux et le point destiné à la rupture (50) est prévu sous forme de rainures dans l'enveloppe extérieure et/ou dans l'enveloppe interne du tube formé (18).

2. Système d'essuie-glace (10) selon la revendication 1, **caractérisé en ce qu'**un premier élément de déclenchement (54), en particulier une rondelle de forme annulaire est prévue sur l'arbre d'essuie-glace (26, 28).

3. Système d'essuie-glace (10) selon la revendication 2, **caractérisé en ce que** le premier élément de déclenchement (54) est inséré dans une rainure (52) de l'arbre d'essuie-glace (26, 28), ayant notamment une forme de clavette.

4. Système d'essuie-glace (10) selon l'une quelconque des revendications 2 ou 3, **caractérisé en ce qu'**un deuxième élément de déclenchement (60) est prévu sur le tube formé (18), lequel coopère avec le premier élément de déclenchement (54).

5. Système d'essuie-glace (10) selon la revendication 4, **caractérisé en ce que** le deuxième élément de déclenchement (60) est réalisé de telle sorte que dans le cas de l'application d'une force axiale sur l'arbre d'essuie-glace (26, 28), le tube formé (18) puisse être écarté radialement vers l'extérieur.

6. Système d'essuie-glace (10) selon l'une quelconque des revendications précédentes, **caractérisé en ce qu'**un élément de support (12) est prévu, lequel porte tous les composants essentiels (14, 16, 38) du système d'essuie-glace (10) et est connecté fixement au tube formé (18).

7. Système d'essuie-glace (10) selon l'une quelconque des revendications précédentes, **caractérisé en ce que** le tube formé (18) est connecté à un élément de fixation (32) avec lequel le dispositif d'essuie-glace (10) est fixé sur le véhicule automobile.
